# EUROPEAN PATENT SPECIFICATION

(11) **EP 2 659 716 B1**
(45) Date of publication and mention of the grant of the patent: **26.05.2021**
(21) Application number: 10861500.6
(22) Date of filing: 30.12.2010
(51) Int. Cl.: H04W 52/18, H04W 72/10, H04W 88/08, H04W 52/26, H04W 52/24, H04W 52/28, H04W 52/14, H04W 24/10

(54) **WIRELESS OPERATION IN VERY HIGH DENSITY ENVIRONMENTS**
DRAHTLOSBETRIEB IN HOCHDICHTEN UMGEBUNGEN
FONCTIONNEMENT SANS FIL DANS DES ENVIRONNEMENTS DE TRÈS HAUTE DENSITÉ

(43) Date of publication of application: 06.11.2013
(73) Proprietor: Ericsson WiFi Inc., Plano TX 75024 (US)
(72) Inventor: LO, Waichi, Kanata, Ontario K2T 1E5 (CA); RAYMENT, Stephen, Ottawa, Ontario K1R 1E2 (CA); RUSSELL, Michael, Kanata, Canada K2K 3J4 (CA); SMITH, Roland, Nepean, Ontario K2J 0E1 (CA); WILLIAMS, Chris, Nepean, Ontario K2G 5B5 (CA)
(74) Representative: Röthinger, Rainer
(86) International application number: PCT/CA2010/002065
(87) International publication number: WO 2012/088579

(56) References cited:
- WO-A1-99/20016
- US-A1- 2006 121 946
- US-A1- 2008 220 803
- US-A1- 2009 310 586
- HARIHARASUDHAN VISWANATHAN: "Adaptive transmit power control based on signal strength and frame loss measurements for WLANs", INTERNET CITATION, 1 October 2009 (2009-10-01), pages I-X, XP002618400, Retrieved from the Internet: URL:http://mss3.libraries.rutgers.edu/dlr/ TMP/rutgers-lib_26644-PDF-1.pdf [retrieved on 2011-01-25]
- ZHI ZHOU ET AL: "Joint tuning of physical carrier sensing, power and rate in high-density WLAN", COMMUNICATIONS, 2007. APCC 2007. ASIA-PACIFIC CONFERENCE ON, IEEE, PI, 1 October 2007 (2007-10-01), pages 131-134, XP031204256, DOI: 10.1109/APCC.2007.4433519 ISBN: 978-1-4244-1373-7
- AKELLA A ET AL: "SELF-MANAGEMENT IN CHAOTIC WIRELESS DEPLOYMENTS", PROCEEDINGS OF THE ANNUAL INTERNATIONAL CONFERENCE ON MOBILE COMPUTING AND NETWORKING, MOBICOM - MOBICOM 2005 - PROCEEDINGS OF THE ELEVENTH ANNUAL INTERNATIONAL CONFERENCE ON MOBILE COMPUTING AND NETWORKING 2005 ASSOCIATION FOR COMPUTING MACHINERY US, vol. CONF. 11, 28 August 2005 (2005-08-28) , pages 185-199, XP001506447, DOI: 10.1145/1080829.1080849 ISBN: 978-1-59593-020-0

## Description

### TECHNICAL FIELD

The present disclosure relates to wireless communication systems. More specifically, the present invention relates to enhancements to protocols and algorithms for contention-based adaptive modulation networks, typically used in unlicensed bands (e.g., Wi-Fi™). These enhancements enable operation in areas with a high density.

### BACKGROUND

With the advent and extreme popularity of smart mobile devices (e.g., the iPhone, BlackBerry, and other Smart Phones), data usage has increased to a point where network congestion caused by bandwidth-hungry devices has led to a looming spectrum crisis that is the biggest threat to the future of mobile telecommunications in America. Evidence of this spectrum crisis is evident, notably at the presidential inauguration in January of 2009, where hundreds of thousands of people gathered to witness the historical event. It is well documented that the cellular network became so congested that no calls were possible. Similarly, cellular network congestion has become a common global occurrence at virtually every major spectator event.

Presently, most wireless networks are optimized to deliver the greatest range and coverage, as this reduces the cost of equipment required for a given area. To achieve this goal, higher radio power, better receive sensitivity, and high gain antennas are all used at the base stations or Access Points (APs). However, in very high-density applications, such as special events, temporary events, emergency events, stadiums, etc., user densities are extremely high; sometimes on the order of users-per-square-meter. In this case, the number of APs should be greatly increased in order to achieve the desired capacity by re-using frequencies throughout the venue. Unfortunately, this increase in density also greatly reduces the probability of interference between APs in the network, thereby nullifying the potential for re-use. In addition, user portable devices (typically erroneously) connecting to APs from long distances, and hence low signal levels, and hence low data rates, should be limited.

Cell-splitting is a common technique used throughout the cellular industry to increase network capacity where available spectrum is scarce. The cellular network derived its name from the deployment techniques used to provide coverage areas. High powered radio frequency transceivers, called macro base transceiver systems (BTS's), were deployed on roof tops and tall towers and by using high gain directional antennas created a contiguous arrangement of "cells" most typically depicted as a hexagonal honeycomb lattice structure. These BTS elements were all interconnected with T1 or T3 wired circuits to central network elements leading to the "cellular network".

As capacity grew, BTS systems added additional radio frequency channels, while improving the efficiency of the radio signal. First generation BTS employed Analog Mobile Phone System (AMPS) that supported a single cellular user per carrier. AMPS was superseded by Time Division Multiple Access (TDMA) supporting three cellular users per carrier. Cellular technology has steadily progressed with twenty years of improvements and new protocols - GSM, CDMA, 2G, 3G, 4G, new modulation formats, and smart antenna / Multiple In Multiple Out (MIMO) systems - such that the utilization of radio frequency spectrum for the cellular network is now so highly optimized that significant capacity gains are no longer possible using the existing network infrastructure cell locations.

Consequently, cell-splitting techniques have been introduced to further capacity. In addition, Distributed Antenna Systems (DAS) were introduced to provide better coverage in office buildings. More recently, there has been an introduction of limited coverage micro-cells and pico-cells for high capacity applications.

It is evident that the evolution of the cellular/wireless industry has shifted from larger macro-cells to smaller pico-cells with greater improvements in spectral and spatial efficiency of licensed band cellular networks.

Unlicensed band networks have evolved in a somewhat divergent path, due to the impact of multiple wireless services sharing the same bands and the requirement for improved coverage. Unlicensed band networks, such as Wi-Fi™, were the first to incorporate advanced spectral and spatial techniques to achieve high levels of spectral and spatial efficiency. However, unlicensed band networks have grown, in contrast to the licensed band cellular networks trends, by starting from very small cells limited by low transmitter power, typically 25mW (14dBm), to achieve cell sizes sufficient to cover a house. They have improved to the point of meeting the Industrial Scientific Medical (ISM) band regulatory limits 4W (36dBm) to provide coverage of large hot spots such as malls or train stations.
Unlicensed band products are also divergent in their network planning/adaptation techniques. Cellular network cell sizes are defined by the transmitted power, modulation formats used, or in the case of CMDA systems, by the spreading codes employed, and have been engineered by network designers and, more recently, by automated software tools used to optimize cell locations and sizes. Unlicensed cells have been autonomous in nature with no central control mechanisms to set the cell sizes. Each unlicensed transceiver has employed techniques to achieve the maximum cell size at the highest transmitter power available. Wi-Fi™ radios have employed spectral (modulation rate adaptation) and spatial (e.g., maximal ratio combining and spatial time block coding) techniques to achieve the greatest possible cell sizes.

Modulation rate adaptation algorithms are well documented in the Wi-Fi™ industry to achieve these goals of maximum coverage at the highest throughput. These algorithms are designed for Carrier Sense Multiple Access/Collision Avoidance (CSMA/CA) protocols, where if a transmitted packet is not acknowledged, the transmitter adjusts/reduces the modulation rate and retransmits the packet again at the same maximum allowed power level. Rate adaptation algorithms are provided by the wireless chip manufacturers and form the de-facto operation of all Wi-Fi™ and wireless devices, so that all devices behave similarly to achieve the maximum coverage at the highest modulation rate.

These algorithms work well in standard wireless networks, but do not work well in very high capacity venues which are interference limited, such as sports stadiums, outdoor concerts, emergency events, temporary events such as carnivals, theme parks, and some very high density urban environments, where the user densities may be measured on the order of users per square meter.

Document "ADAPTIVE TRANSMIT POWER CONTROL BASED ON SIGNAL STRENGTH AND FRAME LOSS MEASUREMENTS FOR WLANS", HARIHARASUDHAN VISWANATHAN, October 2009 may be construed to disclose adaptive per-link Transmit Power Control (TPC) solution for WLANs. In order to make better decisions on transmit power; an AP needs to actively monitor several factors. Accordingly, there is a TPC algorithm based on both link margin estimation as well as frame loss rate measurement.

Document "Joint Tuning of Physical Carrier Sensing, Power and Rate in High-Density WLAN", Zhi Zhou et.al, Proceedings of Asia-Pacific Conference on Communications 2007, may be construed to disclose a technique pertaining to High-Density WLANs, where a large number (10s-100s) of Access Points (APs) are deployed to service a larger number (100s-1000s) of users. Joint tuning of physical carrier sensing, transmission power and data rate in High-Density WLAN is investigated.

Document "Self-Management in Chaotic Wireless Deployments", Aditya Akella et.al, Proceedings on the 11th annual conference on mobile computing and networking 2005, may be construed to disclose a study of the impact of interference in so-called chaotic 802.11 deployments on end-client performance. First, using large-scale measurement data from several cities, it is shown that it is not uncommon to have tens of APs deployed in close proximity of each other. Moreover, most APs are not configured to minimize interference with their neighbors. Then trace-driven simulations are performed to show that the performance of end-clients could suffer significantly in chaotic deployments. It is thus postulated that end-client experience could be significantly improved by making chaotic wireless networks self-managing.

Document WO 99/20016 A1 may be construed to disclose a technique for maintaining a predefined transmission quality in a wireless Metropolitan Area Network (MAN). Each of a plurality of Local Area Networks are coupled to a corresponding router. Each router is coupled to one or more transceivers for interconnecting the routers via wireless links. Each router stores a table representative of the topology of the MAN and receives detected indicia representative of the quality of the wireless links and representative of network traffic loads. The router adapts the manner of transmission and the path of transmission according to the indicia. As a result, the MAN is highly efficient, in terms of cost, power and bandwidth utilisation. For example, a strength of a signal received over a wireless communication link is periodically monitored for maintaining the strength within a predefined range by adjusting the transmission power. In addition, an error rate for the data received over the link is monitored. If the received signal strength remains below the predefined range despite the transmit power having been adjusted to a maximum allowable level, and if the error rate approaches a predefined limit, one or more techniques are selectively employed to reduce the error rate while maintaining a sufficiently high network throughput. The adaptive techniques include changing the data rate, modulation level, error correction coding, and spectrum spreading. In addition, a path for the data is preferably selected according to an Open-Shortest-Path-First algorithm, though one or more alternate paths can be selected for transmitting at least a portion of the data.

### SUMMARY OF THE INVENTION

According to the disclosure, there are provided an unlicensed wireless system according to claim 1, a method according to claim 12, and a computer-readable medium according to claim 13. Developments are set forth in the dependent claims.

The present disclosure addresses the unique and innovative aspects of very high capacity wireless networks in the presence of high interference. In these environments, thousands of wireless users may be actively and concurrently accessing the network in a space-limited venue. A typical example is a baseball stadium, where thousands of smart phone users attempt to access the wireless network either to up-load videos or photos of the game, or to download instant replays or other such information. All of these smart phone users are located inside the same stadium that may measure approximately 200m x 300m (60,000 sq m) and may contain more than 100,000 users resulting in a density of 1.6 users per square meter.

A standard wireless AP optimized for reach may see as much as half of the users in the stadium, but clearly unable to support the required throughput of the thousands of smart phone users, all of which are attempting to access the Internet. Throughput would be unacceptably low, due to the high levels of contention, interference and collisions. Adding enough conventional wireless APs to meet the capacity need would still not solve the problem because these additional APs would each see each other and create self-interference. The present disclosure addresses key aspects of an unlicensed wireless network that is specifically designed for very high capacity environments.

According to a first aspect of the present invention, a wireless system configured to process communications signals from plural user portable devices is provided. The wireless system comprises plural access points, each access point having a processor configured to dynamically adjust access-point transmitter power and receiver sensitivity on a user-by-user basis to a minimum level required to achieve the highest possible modulation rate.

According to a second aspect of the present invention, a wireless system configured to process communication signals to and from plural user portable devices is provided. The wireless system comprises plural wireless access points, each access point having a processor configured to dynamically adjust access-point transmit power on a user-by-user basis to a minimum level required to achieve a target, predetermined signal-to-noise ratio with each user portable device irrespective of the interference observed on the link.

In certain embodiments, the wireless system may comprise an access point that monitors and maintains a table of the Receive Signal Strength Indication of all associated user portable devices. The access point transmit power and receive sensitivity to a device may also be adjusted to a minimum level required to achieve a desired Signal to Noise Ratio.

In alternative embodiments, the access point adjusts transmit power and receive sensitivity in Time Division Duplexing systems based on Receive Signal Strength Indication. The wireless system's access point may also make transmit power adjustments on a per packet basis.

The wireless system uses a dual mode algorithm which is capable of both dynamic power control to maintain the highest data modulation rate and a dynamic modulation rate adjustment to reduce the modulation rate for occasional devices that may have different requirements compared to conventional devices or applications. The dual mode algorithm causes either an increase in power, or a reduction in the modultion rate, on a case-by-case basis.

According to a third aspect of the present invention, a wireless system configured to process communication signals from plural user portable devices is provided. The wireless system comprises plural wireless access points, each access point having a processor configured to process high modulation rate packets before low rate packets.

For this application the following terms and definitions shall apply:

The terms "communicate," and "communicating" and as used herein include both conveying data from a source to a destination, and delivering data to a communications medium, system, channel, network, device, wire, cable, fiber, circuit and/or link to be conveyed to a destination and the term "communication" as used herein means data so conveyed or delivered. The term "communications" as used herein includes one or more of a communications medium, system, channel, network, device, wire, cable, fiber, circuit and link.

The term "processor" as used herein means processing devices, apparatus, programs, circuits, components, systems and subsystems, whether implemented in hardware, tangibly-embodied software or both, and whether or not programmable. The term "processor" as used herein includes, but is not limited to one or more computers, hardwired circuits, signal modifying devices and systems, devices and machines for controlling systems, central processing units, programmable devices and systems, field programmable gate arrays, application specific integrated circuits, systems on a chip, systems comprised of discrete elements and/or circuits, state machines, virtual machines, data processors, processing facilities and combinations of any of the foregoing.

The terms "storage" and "data storage" as used herein mean one or more data storage devices, apparatus, programs, circuits, components, systems, subsystems, locations and storage media serving to retain data, whether on a temporary or permanent basis, and to provide such retained data.

The term "portable user device" as used herein means an electrical or non-electrical device capable of being carried by or on the person of a user or capable of being disposed on or in, or held by, a physical object (e.g., attache, purse) capable of being carried by or on the user, and having at least one function of primary benefit to such user, including without limitation, a cellular telephone, a personal digital assistant ("PDA"), a Blackberry device, a radio, a television, a game system (e.g., a Gameboy™ device), a notebook computer, a laptop/desktop computer, a GPS device, a personal audio device (such as an MP3 player or an iPod™ device), a DVD player, a two-way radio, a personal communications device, a telematics device, a remote control device, a wireless headset, a wristwatch, a portable data storage device (e.g., Thumb™ drive), as well as any devices combining any of the foregoing or their functions.

### DESCRIPTION OF THE DRAWINGS

These and other advantages of the present invention will be readily understood with reference to the following specification and attached drawing wherein:
FIG. 1a is a high-level diagram illustrating communication between transmitting and receiving access points;
FIG. 1b is a diagram illustrating an access point;
FIG. 1c is a block diagram illustrating communication between transmitting and receiving access points;
FIG. 2 is a diagram illustrating Signal to Noise Ratio based modulation rate control;
FIG. 3 is a flow diagram illustrating downstream traffic prioritization;
FIG. 4 is a diagram illustrating a subtending network management element; and
FIG. 5 is a block diagram illustrating the digital control of an incoming radio signal.

### DETAILED DESCRIPTION

Preferred embodiments of the present invention will be described herein below with reference to the accompanying drawings. In the following description, well-known functions or constructions are not described in detail since they would obscure the invention in unnecessary detail.

Described herein are a number of steps, methods and/or solutions which can be applied to greatly improve the coverage and efficiency of a data network. These steps, methods and/or solutions may include one ore more of managing: Static Power Control, Dynamic Power Control, SNR-Based Modulation Rate, Downstream Traffic Prioritization, Foreign Packet Rejection, Packet De-aggregation, Admission Control, Broadcast Control, and/or Physical Network Design. Each step, method and/or solution may be applied individually or in combination with one or more other steps, methods and/or solutions.

Static Power Control. A first solution may be to apply Static Power Control. Rather than maximizing the size of the cell, the system disclosed in the present embodiment limits cell size to a minimum size required to maintain proper function. The minimum size may be determined by the spacing between the APs, and the distance to the user portable device or devices. The present disclosure introduces a system to reduce transmit power and receive sensitivity to the minimum levels required to achieve optimal AP to user links.

An important benefit of reducing transmit power and receive sensitivity is the reduction in self interference. APs on the same or adjacent channels, especially if mounted high and/or within line-of-sight (LoS) of each other, can interfere with each other. Reducing power below the levels of the user portable devices (typically about 15dBm) may not further increase system performance. Although it may be possible to manually adjust transmit power and receive sensitivity, this would have to be done on a site-by-site, AP-by-AP basis. This approach is possible, but may be very time consuming, error prone and particularly onerous in temporary deployments.

The system disclosed herein is capable of automatically making all adjustments. For example, both power and sensitivity may be adjusted based on the power measured by an AP from neighboring APs.

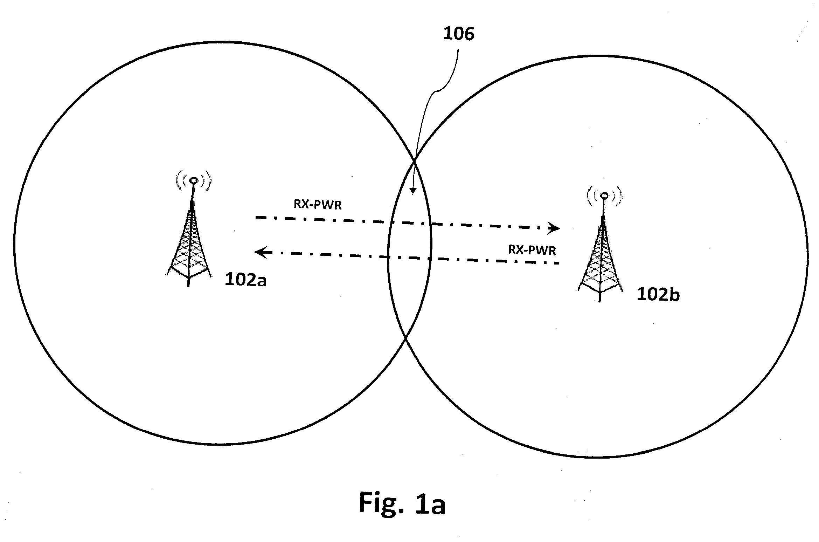

Referring now to FIG. 1a, a receiving AP 102b can message back to the transmitting AP 102a, via a special management frame with an indication of the power received (Rx-PWR) from the transmitting AP 102. The transmitting AP 102a then adjusts its power according to a preset or dynamic setting, typically to achieve a desired level of cell overlap 106. The cell overlap 106 is the coverage area where one or more APs 102 overlap (e.g., transmitting AP 102a and a neighboring receiving AP 102b).

The desired amount of cell overlap 106 may be the amount of overlap needed to provide adequate coverage without interference from nearby APs 102. The preset setting may be a stored value, or set of values, which can increase or decrease the AP's 102 power depending on the desired amount of cell overlap 106.

Managing cell overlap 106 size is important because a large cell overlap 106 impacts service delivery in urban areas and inside of buildings, where service may be most relied upon and where the lack of isolation limits network bandwidth in densely populated areas. A typical Voice over WLAN (VoWLAN) network often requires a cell overlap 106 of around 20 percent (2.4 GHz), and approximately 15 to 20 percent (5 GHz), where a WLAN Data design may use an AP 102 cell overlap 106 of 5 to 10 percent. A purpose of cell overlap 106 is to ensure that a radio can detect and connect to alternative APs 102 when close to the boundary of a cell. Allowing a radio to change APs 102 with a minimal connection interruption by minimizing the amount of data rate shifting and retransmission at a cell boundary for a given client. The optimal VoWLAN cell boundary recommendation may be around -67 dBm.

For example, if an AP 102 is operating at power "X", but the cell overlap 106 is too large, AP's 102 power may decrease to a preset value of "X - Y" so that the overlap is reduced, or minimized (e.g., around 20%). However, if the cell overlap 106 is too small or nonexistent, the AP's 102 power may increase to a second preset power value "X + Z" (where "Y" may or may not be equal to "Z") such that the cell overlap 106 is increased to the desired cell overlap 106 size.

In lieu of a stored preset setting, the AP's 102 power adjustments may be dynamically increased or decreased depending on the degree, or amount, of cell overlap 106. This dynamic system may be configured such that a preferred amount of cell overlap 106 is preserved where each AP's 102 power may be increased or decreased in order to maintain the desired amount of cell overlap 106.

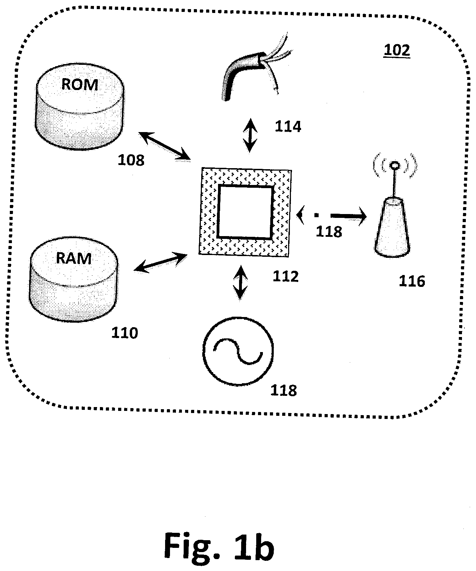

Referring now to Figs. 1b, each AP 102 may comprise a processor 112, power supply 118, antenna 116, wired communication link 114, interface 118 (e.g., RF transceiver, RF front end, etc.) and storage memory including RAM 110 and ROM 108.

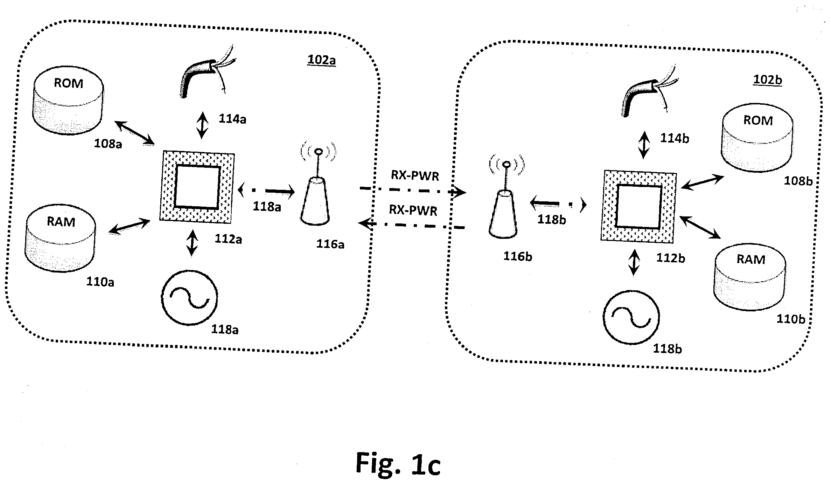

Referring now to Figs. 1c, the system of FIG. 1a is described in greater detail. Receiving AP's 102b antenna 116b receives the management packet with the Rx-PWR from the transmitting AP 102a and sends it through an interface 118b to processor 112b. Processor 112b processes and manipulates the data to determine whether the power should be adjusted and whether it should be increased or decreased. To process and manipulate the data, the processor 112b may be equipped to run software which can be stored to the ROM 108b. Data collected or created by the AP 102 may be stored to the RAM 110b or stored to the ROM 108b for longer term retention. Data collected or created by the AP 102 may also be communicated to another AP 102 or any other device capable of wired or wireless communication. The processor 112b and other hardware are powered by power supply 118b, which may be alternating or direct current (e.g., traditional line current, battery power, solar power, wind power, etc.). In certain embodiments, AP 102a may communicate with AP 102b using a wired communication link 114a in addition to, or in lieu of, the antenna 116a and wireless interface 118a.

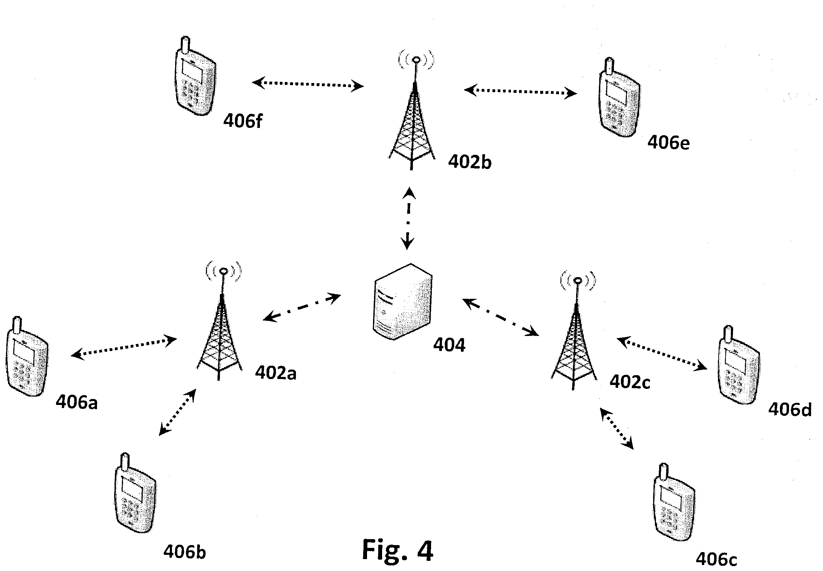

Referring now to FIG. 4, when multiple radios 406, 406a to 406f, are in proximity of each other, a subtending network management element 404 in communication with each of the APs 402 may use the data collected (e.g., signal strength, distances etc.) to make better educated decisions about adjustments at each AP 402. This network management element 404 allows for the adjustment of power and sensitivity of each AP 402 by interpreting the Rx-PWR messages from one or more surrounding APs 402, along with the known distance between the AP and surrounding one or more APs 402.

For example, if the subtending network management element 404 determines that AP 402a and 402c each have a high signal strength, but are in very close proximity to one another, the subtending network management element 404 may cause one or both of the APs 402a/402c to decrease the output power. Similarly, if the subtending network management element 404 determines that AP 402a and 402c each have low signal strengths, the subtending network management element 404 may cause one or both of the APs 402a/402c to increase the output power. In certain embodiments, the subtending network management element 404 may find that an AP 402 has a large number of radios 406 on a single AP 402 and, in response, the subtending network management element 404 may increase the power to surrounding APs 402.

AP locations are typically identified by longitude / latitude (long-lat) coordinates which can either be manually entered (e.g., upon installation) or calculated using a GPS receiver (e.g., integral with the AP).

Radio transmit power may be readily adjusted, typically under software control. An example method of adjusting transmit power is disclosed in U.S. Patent Publication No. 2008/0220803 to Joo Hyung Lee. Lee teaches the method of adjusting transmit power by obtaining the signal strength parameter value for the received signal. The method then requests for an increase (and later a decrease) in transmission power in response to the received signal strength parameter value. From these values, an accumulated signal strength parameter value may be calculated for the received signal over an accumulation period. The lower signal strength parameter value range (or the upper signal strength parameter value range) may be adjusted dependent on the accumulated signal strength parameter value. Another example method of adjusting transmit power is disclosed in U.S. Patent Publication No. 2010/0197340 to Wen-Pin Lin. Analogous to the method taught by Lee, Lin teaches a method that receives a request (via a communications protocol) from a remote unit to provide a power level associated with a transmitting component of a base station for a cellular network communications system. The power level of a signal is then measured and provided by the transmitting component in response to receiving the request from the remote unit; and providing, from the base station, the measured power level to the remote unit over the communications protocol.

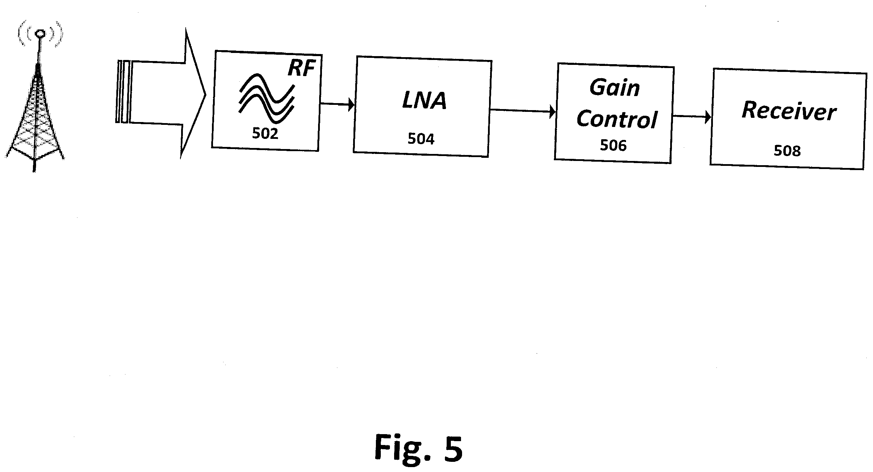

However, reduction in receive sensitivity may be somewhat more difficult with fully integrated radios. Referring to FIG. 5, the gain elements of an incoming radio signal 502 may be digitally controlled 506 (e.g., automatic gain control), typically after a Low Noise Amplifier (LNA) 504 but before the receiver 508. While this method may be possible, it may also be costly to implement. Some contemporary integrated radios are capable of providing gain control of the receiver. In these radios, simple software modifications to the control are used to alter the gain settings and hence reduce sensitivity.

**Dynamic Power Control.** Another approach is to apply Dynamic Power Control. This disclosure introduces a unique form of transmit power and receive sensitivity control known as Dynamic Power Control. Dynamic Power Control is capable of determining, at an AP, the power level received from one or more portable devices then adjusting, based on the power level received from one or more portable devices, the power being transmitted by the AP to a minimum power level required for communication with the one or more portable devices. For example, an AP may determine the power received (Rx-PWR) from a user's portable device. The AP's transmitting power is then adjusted according to a preset or dynamic setting for each of the portable devices.

Conventional wireless APs attempt to maximize cell coverage by maintaining a constant single transmit power level and a constant receive sensitivity. This is typically accomplished by reducing the operating modulation rate such that lower modulation rates are used when the user portable device is further away and the Signal to Noise Ratio (SNR) decreased. Data speed delivery is typically directly related to the SNR. For example, a data speed 1Mbps may require a SNR of OdBm while a 54Mbps data speed may require a SNR of 25dBm. Thus, as the data speed increases, the required SNR increases.

In addition to static power control, the present embodiment dynamically reduces the transmitter power and receiver sensitivity on a packet-by-packet basis while maintaining the highest possible modulation rate. In doing so, the present mbodiment reduces both interference noise floor and packet time duration.

Generally speaking, high capacity cells are small in order to accommodate the high number of users. These high capacity cells are typically on the order of less than about 20m (about 65 feet) in diameter (where the AP is at the center). Radio signal strength of course decreases with distance from an AP. In certain situations, for example, if an AP typically transmits at +26dBm EIRP, with static power control, the power may be reduced to +16 dBm (e.g., based on a receive power level at the AP), therefore, significantly reducing self-interference. At +16dBm transmit power, users located in free space at distances up to 20m from the AP may see static RSSI profiles of:

| **Distance (meters)** | **Static RSSI Profile (dBm)** |
|---|---|
| 1 | -24 |
| 2.5 | -32 |
| 5 | -38 |
| 10 | -44 |
| 20 | -50 |

AP transmit power may allow, for example, 10 dB of body shadowing and 10 dB of fade margin for a total of 20 dB of fade margin. A fade margin is a design allowance that provides for sufficient system gain or sensitivity to accommodate expected fading (e.g., when a portable device does not have a clear line of sight or is obstructed), for the purpose of ensuring that the required quality of service is maintained. In other words, the fade margin is an amount by which a received signal level may be reduced without causing system performance to fall below a specified threshold value.

However, using the same example, many users connected to an AP may not require a large 20dB fade margin (e.g., if a user has a clear line of sight to an AP or holds their portable device in a way that it is not shadowed or obstructed). In this situation, the power being transmitted to this user may be dynamically decreased, limiting interference without sacrificing performance.

Although the static power control may be helpful in limiting the interference of the cell, as described in the example above, by 10dB, it assumes all users require equal transmit power levels, which may not always be the case. Dynamic power control remedies this misconception by constantly adjusting the AP transmit power and receive sensitivity, therefore reducing it below a limit set by the static power control (or other pre-set value). This methodology allows each user portable device to receive only the power required to maintain the highest modulation rate and limits overall system level interference.

Referring back to the example above, if a user portable device located 10 meters from the AP had 3dB of body shadowing, and a 7 dB fade margin requirement, then the AP may reduce the power seen by the device from the fixed value of -44 dBm, to, for example, -60 dBm. If the same device located 10m from the AP were held in a different orientation, such that the shadowing may be increased from 3dB to 10dB, then the AP would dynamically increase the transmitted power by 7 dB to account for the increased shadowing of that user.

The dynamic power control algorithm maintains the allowed transmit power and receive sensitivity on a per-user basis, and continuously adjusts this power to ensure that the user maintains a maximum modulation rate. As a result, on-air transmission burst time is reduced while maintaining the lowest possible transmit power and receive sensitivity.

The dynamic power control algorithm has a dual benefit of (1) further reducing overall interference power in the high capacity venue; and (2) reducing the on-air transmission burst time by using the highest modulation rate for all transmissions.

A dual mode algorithm, one which uses both dynamic power control to maintain the highest data throughput / modulation rate, but also includes a dynamic modulation rate adjustment to reduce the modulation rate for occasional devices, or for e.g., voice calls, which may have different requirements compared to conventional devices or applications is described. In this mode, the dual algorithm allows, on a case-by-case basis (e.g., for specific client cards, or for specific client applications), either an increase in power, or a reduction in the modulation rate, so that the specific allowed case can be handled.

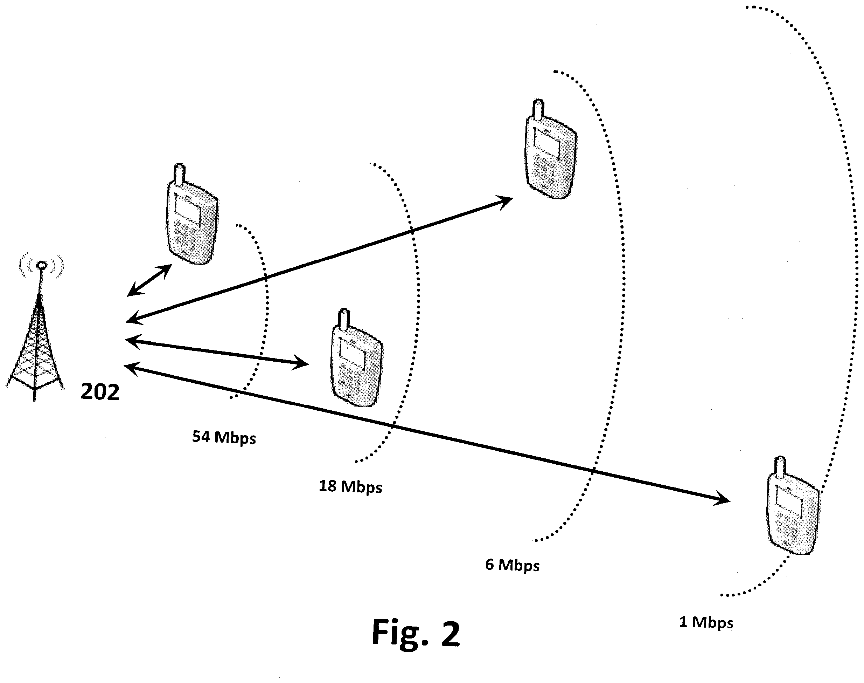

**SNR Based Modulation Rate Control.** Referring now to FIG. 2, a diagram of Signal to Noise Ratio (SNR) Based Modulation Rate Control is depicted. Many contemporary radios perform automatic modulation rate control, where the modulation rate at either end of the link may be adjusted to the maximum possible at a given distance. Typically, modulation rate algorithms may reduce the rate until a required error rate may be achieved. They typically accomplish this by waiting for a positive acknowledgement signal (ACK) to be received from the receiving device. However, in high capacity situations with high interference, this may often result in the modulation rate chosen being lower than what may be required to achieve a given SNR from the particular user portable device (i.e., if the desired user portable device is near but subjected to interference). Here we differentiate between interference levels and the SNR levels required to achieve given modulation rates.

To overcome this problem, the present embodiment discloses a system where each AP 202 continuously monitors and maintains a table of the Receive Signal Strength Indication (RSSI) of all associated user portable devices. The AP's Transmit (Tx) pwer and Receive (Rx) sensitivity for unicast packets to each device may be then adjusted to the minimum level required to achieve a desired SNR and the requisite modulation rate for that SNR may be used. This minimum level can be determined from preset or dynamic settings stored in memory in the AP based on the SNR levels required for the devices in use. As in conventional systems, this may be an incremental enhancement to the dynamic power control above in which modulation rate may be adjusted in response to the error rate on the link. Tx power, as well as Rx sensitivity, can be adjusted in Time Division Duplexing systems, based on RSSI, where the channel is reciprocal. TDD is the application of time-division multiplexing to separate outward and return signals. TDD emulates full duplex communication over a half-duplex communication link. Examples of Time Division Duplexing systems may include: UMTS 3G supplementary air interfaces TD-CDMA for indoor mobile telecommunications; The Chinese TD-SCDMA 3G mobile telephony air interface; DECT wireless telephony; Half-duplex packet mode networks based on carrier sense multiple access, for example 2-wire or hubbed Ethernet, Wireless local area networks and Bluetooth™, can be considered as TDD systems, albeit not TDMA with fixed frame-lengths; IEEE 802.16 WiMAX; and PACTOR.

The AP may make this adjustment on a per packet basis. As devices are typically moving fairly slowly in these environments, a fixed interval of up to several seconds may also be used. Furthermore, in order to simplify the control of the radios, using only a small number of preset candidate gain values yield acceptable results rather than a continuous range of closely spaced values.

In addition, in high interference environments, collisions cause retransmissions, which typically occur at a lower modulation rate. Ongoing collisions lead to a reduction even in the starting modulation rate for packets. This results in too many user portable devices operating at low rates, again slowing down the entire system. In this case, the system described herein limits the retransmission modulation rates to only higher levels even when collisions occur. Also, modulation rates may be set to the highest possible to reach all clients for broadcast packets or for management packets, rather than using the lowest rates. This highest possible rate is computed based on the known power level and hence modulation rate of each of the user devices.

Downstream Traffic Prioritization. Downstream Traffic Prioritization may be another factor which can be manipulated to increase downstream efficiency and throughput. When user portable devices operating at various modulation rates are communicating with an AP, a low-rate user (e.g., one carrying 1Mbps packets) can inhibit a high-rate user (e.g., one carrying 54Mbps packets) and reduce the overall downstream efficiency of the AP. The system disclosed herein allows for higher rate downstream packets to transmit more often, optimizing the overall efficiency of the air link.

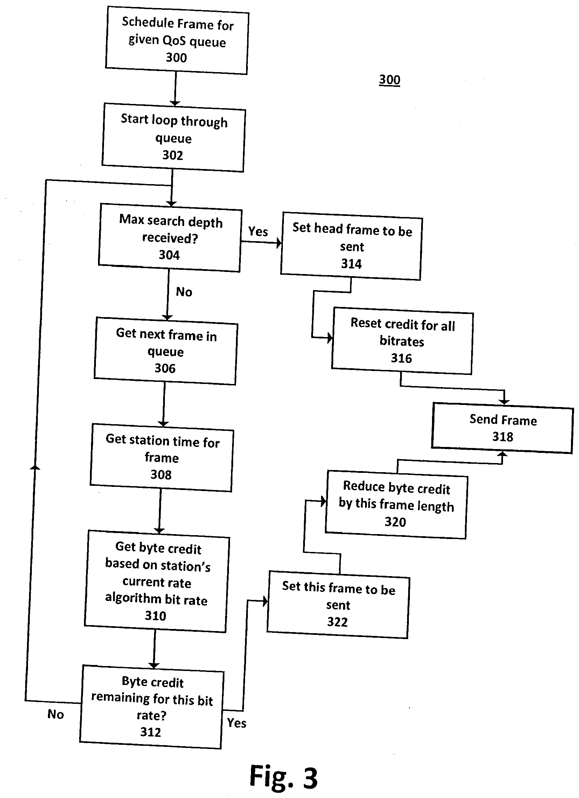

Referring now to FIG. 3, this system may use an algorithm 300 that assigns a credit of bytes to each rate directly proportional to the modulation rate of the packet value (e.g., 54 Mbps packet may receive a credit of 54 times the credit that a 1Mbps packet may receive) to increase the overall downstream efficiency and throughput. Prior to queuing a particular packet to the AP 318, the algorithm searches the transmit queue 302 (starting at the head of the queue) for a packet that still has remaining credits left 304, 312. If it finds one with credit 306, 308, 310, it immediately queues that packet to the AP 318 and reduces the remaining credit for that rate 322, 320. If no packets with credits are found, it may send the next packet at the head of the queue 314. This allows higher rate packets to jump ahead of the lower rate packets in the queue, resulting in a more efficient use of air-time on the channel.

Once the algorithm has used up all the credit and chooses the head packet to transmit 314, it refreshes the credit for all the rates 316. The number of retries for a transmitted packet may be also considered as it occupies the channel. The credit for a particular rate may be penalized accordingly (e.g., by removing or reducing the credit value). Keeping all the packets in one queue may be preferred (rather than using a separate queue for each rate) to maintain packet order.

**Foreign Packet Rejection.** In high capacity systems, all packets destined for APs that are not part of the network may unnecessarily consume AP resources. The present system can reject and/or discard those foreign packets at the very lowest processing layer in the AP. This may be accomplished by examining the destination Media Access Control (MAC) address in the header of the packet. There are at least three numbering spaces, managed by the Institute of Electrical and Electronics Engineers (IEEE), which are in common use for formulating a MAC address: MAC-48, EUI-48, and EUI-64. The IEEE claims trademarks on the names "EUI-48" and "EUI-64", where "EUI" stands for Extended Unique Identifier. If the MAC address does not match that of the AP (or its neighbors) the packets will not be processed any further.

**Packet De-aggregation.** Many contemporary radio protocols provide a means of aggregating multiple short packets into a single longer packet before transmitting, to prevent the excessive overhead incurred by transmitting numerous short packets and thereby improve overall throughput. The downside of this approach may be that a particular device may be "on-the-air" for a long period denying access to other devices. In this high capacity system, aggregation feature may be selectively disabled and the shorter packets are to be transmitted individually.

**Admission Control.** When many user portable devices are trying to access an AP, the AP may eventually be overwhelmed. Therefore, it would be advantageous to control access to the APs. This may be a form of admission control, and may be accomplished in several ways. Firstly, access may be controlled based on the number of devices. Once the number of connected devices exceeds a preset number, any further devices are denied. Thus, total throughput to each of the connected user portable devices may be limited at the AP.

Secondly, access may be limited to devices based on their received signal level (RSSI). Low signal strength devices perform at lower throughputs, occupy more air-time and block access to higher strength (and hence higher throughput devices). Therefore, the AP may deny access to the lower signal strength devices, thus improving overall performance for all devices connected to the AP.

In most cases, device rejection may be performed at the lowest level in the protocol. For example, in Wi-Fi™ systems, a Probe Request or Association Request management messages may be used. If access to a particular AP is denied, an automatic form of load balancing may be enforced, as the user portable device may attempt to connect to any other, potentially less congested, APs within range.

Broadcast Control. Particularly deleterious to the performance of these radio networks are broadcast packets. Example broadcast packets include: Dynamic Host Configuration Protocol (DHCP) and Address Resolution Protocol (ARP). DHCP is an Internet protocol for automating the configuration of computers that use TCP/IP. DHCP may be used to automatically assign IP addresses, to deliver TCP/IP stack configuration parameters such as the subnet mask and default router, and to provide other configuration information such as the addresses for printer, time and news servers. ARP is a network layer protocol used to convert an IP address into a physical address (e.g., a DLC address), such as an Ethernet address. A host wishing to obtain a physical address broadcasts an ARP request to the TCP/IP network. A host on a network that has the IP address in the request then replies with its physical hardware address.

On the downstream, the only required broadcast packets are ARP Response, DHCP Offer, DHCP ACK and DHCP NAK. In the present embodiment, the AP may block all other broadcast messages. Further, the AP may block DHCP broadcasts responses for MAC addresses that are not used by an attached user portable device. The AP may also block ARP responses for IP addresses that are not use by an attached user portable device.

Physical Network Design. A variety of aspects of physical network design are also important. In particular, special AP antennas are used to reduce interference between APs. Narrow beam directional antennas with highly attenuated sidelobes and/or down titling antennas to reduce co-channel and adjacent channel interference may be used.

In applications where APs are interconnected by wireless backhaul links, the access antennas may be positioned low down to prevent self interference, while the backhaul antennas may be placed higher up to ensure the highest performance backhaul links at as close as possible to Line of Sight (LoS) conditions.

## Claims

1. An unlicensed wireless system configured to process communication signals from plural user cellular telephones (406, 406a, 406b, 406c, 406d, 406e, 406f), comprising:
plural access points (102, 102a, 102b, 202, 402, 402a, 402b, 402c), each access point having a processor (112, 112a, 112b) configured to use a dual mode algorithm capable of both dynamic power control and dynamic modulation rate adjustment, wherein in the dynamic power control mode, the processor is configured to dynamically adjust access-point transmitter power and receiver sensitivity, on a user cellular telephone - by - user cellular telephone basis, to a minimum level required to achieve a target Signal-to-Noise Ratio, SNR, from each user cellular telephone irrespective of an interference observed on a link between the access point and the user cellular telephone or a highest possible modulation rate,
wherein the dual mode algorithm allows either an increase in power, or a reduction in the modulation rate, on a case-by-case basis.

2. The unlicensed wireless system according to Claim 1, wherein the access point is configured to monitor and maintain a table of Receive Signal Strength Indication, RSSI, for all associated user cellular telephones.

3. The unlicensed wireless system according to Claim 2, wherein each processor is configured to adjust the access point transmit power and receive sensitivity to a minimum level required to achieve the target SNR.

4. The unlicensed wireless system according to Claim 1, wherein the case-by-case basis relates to specific client applications.

5. The unlicensed wireless system according to Claim 1, wherein the case-by-case basis relates to specific devices.

6. The unlicensed wireless system according to Claim 1, wherein each processor is configured to adjust the corresponding access point transmit power and receive sensitivity below a preset limit.

7. The unlicensed wireless system according to Claim 6, wherein each user cellular telephone receives only power required to maintain the highest modulation rate.

8. The unlicensed wireless system according to Claim 1, wherein each processor is configured to set an access point transmit power level to allow the highest modulation rate to operate.

9. The unlicensed wireless system according to Claim 1, wherein the unlicensed wireless system is a Time Division Duplexing system and the access point is configured to adjust transmit power and receive sensitivity based on Receive Signal Strength Indication, RSSI.

10. The unlicensed wireless system according to Claim 1, wherein the access point is configured to make transmit power adjustments on a per packet basis.

11. The unlicensed wireless system according to claim 1, wherein each access point is configured to process high modulation rate packets before low rate packets.

12. A method for processing communication signals from plural user cellular telephones (406, 406a, 406b, 406c, 406d, 406e, 406f) in an unlicensed wireless system having plural access points (102, 102a, 102b, 202, 402, 402a, 402b, 402c), each access point having a processor (112, 112a, 112b) configured to use a dual mode algorithm capable of both dynamic power control and dynamic modulation rate adjustment, comprising:
each access point processor, in the dynamic power control mode, dynamically adjusting access-point transmitter power and receiver sensitivity, on a user cellular telephone - by - user cellular telephone basis, to a minimum level required to achieve a target Signal-to-Noise Ratio, SNR, from each user cellular telephone irrespective of an interference observed on a link between the access point and the user cellular telephone or a highest possible modulation rate,
wherein the dual mode algorithm allows either an increase in power, or a reduction in the modulation rate, on a case-by-case basis.

13. A computer-readable medium comprising code portions which, when executed on a processor, configure the processor to perform all steps of a method according to claim 12.

## Patentansprüche

1. Unlizenziertes drahtloses System, das konfiguriert ist, um Kommunikationssignale von mehreren Benutzerzelltelefonen (406, 406a, 406b, 406c, 406d, 406e, 406f) zu verarbeiten, umfassend:
mehrere Zugangspunkte (102, 102a, 102b, 202, 402, 402a, 402b, 402c), wobei jeder Zugangspunkt einen Prozessor (112, 112a, 112b) aufweist, der konfiguriert ist, um einen Dualmodus-Algorithmus zu verwenden, der sowohl zur dynamischen Leistungssteuerung als auch zur dynamischen Modulationsratenanpassung fähig ist, wobei der Prozessor im dynamischen Leistungssteuerungsmodus konfiguriert ist, um die Sendeleistung und die Empfängerempfindlichkeit des Zugangspunkts auf einer Benutzerzelltelefon-zu-Benutzerzelltelefon-Basis auf einen Minimalpegel dynamisch anzupassen, der erforderlich ist, um ein Soll-Signal-Rausch-Verhältnis, SNR, von jedem Benutzerzelltelefon unabhängig von einer Interferenz, die auf einer Verbindung zwischen dem Zugangspunkt und dem Benutzerzelltelefon beobachtet wird, oder eine höchstmögliche Modulationsrate zu erreichen,
wobei der Dualmodus-Algorithmus auf einer Fall-zu-Fall-Basis entweder eine Leistungserhöhung oder eine Verringerung der Modulationsrate zulässt.

2. Unlizenziertes drahtloses System nach Anspruch 1, wobei der Zugangspunkt konfiguriert ist, um eine Tabelle der Empfangssignalstärkeangabe, RSSI, für alle zugehörigen Benutzerzelltelefone zu überwachen und zu pflegen.

3. Unlizenziertes drahtloses System nach Anspruch 2, wobei jeder Prozessor konfiguriert ist, um die Sendeleistung und die Empfängerempfindlichkeit des Zugangspunkts auf einen Minimalpegel einzustellen, der erforderlich ist, um das Soll-SNR zu erreichen.

4. Unlizenziertes drahtloses System nach Anspruch 1, wobei sich die Fall-zu-Fall-Basis auf spezifische Client-Anwendungen bezieht.

5. Unlizenziertes drahtloses System nach Anspruch 1, wobei sich die Fall-zu-Fall-Basis auf bestimmte Vorrichtungen bezieht.

6. Unlizenziertes drahtloses System nach Anspruch 1, wobei jeder Prozessor konfiguriert ist, um die Sendeleistung und die Empfängerempfindlichkeit des entsprechenden Zugangspunkts unterhalb eines voreingestellten Grenzwerts einzustellen.

7. Unlizenziertes drahtloses System nach Anspruch 6, wobei jedes Benutzerzelltelefon nur die Leistung erhält, die zur Aufrechterhaltung der höchsten Modulationsrate erforderlich ist.

8. Unlizenziertes drahtloses System nach Anspruch 1, wobei jeder Prozessor konfiguriert ist, um einen Sendeleistungspegel des Zugangspunkts so einzustellen, dass der höchsten Modulationsrate der Betrieb ermöglicht wird.

9. Unlizenziertes drahtloses System nach Anspruch 1, wobei das unlizenzierte drahtlose System ein Zeitteilungsduplexsystem ist und der Zugangspunkt konfiguriert ist, um die Sendeleistung und die Empfängerempfindlichkeit basierend auf der Empfangssignalstärkeangabe, RSSI, einzustellen.

10. Unlizenziertes drahtloses System nach Anspruch 1, wobei der Zugangspunkt konfiguriert ist, um Sendeleistungsanpassungen auf einer Pro-Paket-Basis vorzunehmen.

11. Unlizenziertes drahtloses System nach Anspruch 1, wobei jeder Zugangspunkt konfiguriert ist, um Pakete mit hoher Modulationsrate vor Paketen mit niedriger Rate zu verarbeiten.

12. Verfahren zum Verarbeiten von Kommunikationssignalen von mehreren Benutzerzelltelefonen (406, 406a, 406b, 406c, 406d, 406e, 406f) in einem unlizenzierten drahtlosen System mit mehreren Zugangspunkten (102, 102a, 102b, 202, 402, 402a, 402b, 402c), wobei jeder Zugangspunkt einen Prozessor (112, 112a, 112b) aufweist, der konfiguriert ist, um einen Dualmodus-Algorithmus zu verwenden, der sowohl zur dynamischen Leistungssteuerung als auch zur dynamischen Modulationsratenanpassung fähig ist, umfassend:
dynamisches Einstellen, bei jedem Zugangspunktprozessor im dynamischen Leistungssteuerungsmodus, der Zugangspunkt-Sendeleistung und
- Empfängerempfindlichkeit auf einer Benutzerzellentelefon-zu
- Benutzerzellentelefon-Basis auf einen Minimalpegel, der erforderlich ist, um ein Soll-Signal-Rausch-Verhältnis, SNR, von jedem Benutzerzellentelefon unabhängig von einer Interferenz, die auf einer Verbindung zwischen dem Zugangspunkt und dem Benutzerzelltelefon beobachtet wird, oder eine höchstmögliche Modulationsrate zu erreichen,
wobei der Dualmodus-Algorithmus auf einer Fall-zu-Fall-Basis entweder eine Leistungserhöhung oder eine Verringerung der Modulationsrate zulässt.

13. Computerlesbares Medium, das Codeabschnitte umfasst, die bei Ausführung auf einem Prozessor den Prozessor konfigurieren, um alle Schritte eines Verfahrens nach Anspruch 12 durchzuführen.

## Revendications

1. Système sans fil sans licence configuré pour traiter des signaux de communication provenant de téléphones cellulaires d'utilisateurs multiples (406, 406a, 406b, 406c, 406d, 406e, 406f), comprenant :
des points d'accès multiples (102, 102a, 102b, 202, 402, 402a, 402b, 402c), chaque point d'accès ayant un processeur (112, 112a, 112b) configuré pour utiliser un algorithme bimode apte à un ajustement à la fois de commande de puissance dynamique et de rapidité de modulation dynamique, dans lequel, dans le mode de commande de puissance dynamique, le processeur est configuré pour ajuster dynamiquement une puissance d'émetteur et une sensibilité de récepteur de point d'accès, sur une base de téléphone cellulaire d'utilisateur par téléphone cellulaire d'utilisateur, à un niveau minimum requis pour atteindre un rapport signal-bruit, RSB, cible de chaque téléphone cellulaire d'utilisateur quelle que soit une interférence observée sur une liaison entre le point d'accès et le téléphone cellulaire d'utilisateur ou une rapidité de modulation la plus élevée possible,
dans lequel l'algorithme bimode permet soit une augmentation de puissance, soit une réduction de la rapidité de modulation, sur une base au cas par cas.

2. Système sans fil sans licence selon la revendication 1, dans lequel le point d'accès est configuré pour surveiller et maintenir une table d'indication de force de signaux de réception, RSSI, pour tous les téléphones cellulaires d'utilisateurs associés.

3. Système sans fil sans licence selon la revendication 2, dans lequel chaque processeur est configuré pour ajuster la puissance d'émission et la sensibilité de réception de point d'accès à un niveau minimum requis pour atteindre le RSB cible.

4. Système sans fil sans licence selon la revendication 1, dans lequel la base au cas par cas se rapporte à des applications clientes spécifiques.

5. Système sans fil sans licence selon la revendication 1, dans lequel la base au cas par cas se rapporte à des dispositifs spécifiques.

6. Système sans fil sans licence selon la revendication 1, dans lequel chaque processeur est configuré pour ajuster la puissance d'émission et la sensibilité de réception de point d'accès correspondant en-dessous d'une limite prédéfinie.

7. Système sans fil sans licence selon la revendication 6, dans lequel chaque téléphone cellulaire d'utilisateur ne reçoit que la puissance requise pour maintenir la rapidité de modulation la plus élevée.

8. Système sans fil sans licence selon la revendication 1, dans lequel chaque processeur est configuré pour fixer un niveau de puissance d'émission de point d'accès pour permettre que la rapidité de modulation la plus élevée fonctionne.

9. Système sans fil sans licence selon la revendication 1, dans lequel le système sans fil sans licence est un système à duplexage par répartition dans le temps et le point d'accès est configuré pour ajuster la puissance d'émission et la sensibilité de réception sur la base de l'indication de force de signaux de réception, RSSI.

10. Système sans fil sans licence selon la revendication 1, dans lequel le point d'accès est configuré pour effectuer des ajustements de puissance d'émission sur une base par paquet.

11. Système sans fil sans licence selon la revendication 1, dans lequel chaque point d'accès est configuré pour traiter des paquets à rapidité de modulation élevée avant des paquets à basse rapidité.

12. Procédé de traitement de signaux de communication provenant de téléphones cellulaires d'utilisateurs multiples (406, 406a, 406b, 406c, 406d, 406e, 406f) dans un système sans fil sans licence ayant des points d'accès multiples (102, 102a, 102b, 202, 402, 402a, 402b, 402c), chaque point d'accès ayant un processeur (112, 112a, 112b) configuré pour utiliser un algorithme bimode apte à un ajustement à la fois de commande de puissance dynamique et de rapidité de modulation dynamique, comprenant :
chaque processeur de point d'accès, dans le mode de commande de puissance dynamique, ajustant dynamiquement une puissance d'émetteur et une sensibilité de récepteur de point d'accès, sur une base de téléphone cellulaire d'utilisateur par téléphone cellulaire d'utilisateur, à un niveau minimum requis pour atteindre un rapport signal-bruit, RSB, cible de chaque téléphone cellulaire d'utilisateur quelle que soit une interférence observée sur une liaison entre le point d'accès et le téléphone cellulaire d'utilisateur ou une rapidité de modulation la plus élevée possible,
dans lequel l'algorithme bimode permet soit une augmentation de puissance, soit une réduction de la rapidité de modulation, sur une base au cas par cas.

13. Support lisible par ordinateur comprenant des parties de code qui, lorsqu'elles sont exécutées sur un processeur, configurent le processeur pour mettre en oeuvre toutes les étapes d'un procédé selon la revendication 12.
